# EUROPEAN PATENT SPECIFICATION

(11) **EP 1 312 249 B1**
(45) Date of publication and mention of the grant of the patent: **08.02.2006**
(21) Application number: 02079731.2
(22) Date of filing: 13.11.2002
(51) Int. Cl.: A01D 34/00, A01D 34/73

(54) **Cutting blade for lawn-mower machine**
Schneidmesser für Rasenmäher
Lame de coupe pour tondeuse à gazon

(30) Priority: 14.11.2001 IT MI20010604 U
(43) Date of publication of application: 21.05.2003
(73) Proprietor: GGP Italy S.p.A., 31033 Castelfranco Veneto (TV) (IT)
(72) Inventor: Ferrari, Maurizio, 20144 Milano (IT)
(74) Representative: Mittler, Enrico

(56) References cited:
- EP-A- 0 069 110
- US-A- 4 318 268
- US-A- 5 327 710
- US-A- 5 711 141

## Description

The present invention concerns a cutting blade for lawn mower machine, the latter term meaning both lawn mowers that are pushed by a user and those with seated driver (normally called "small tractors").

By rotating inside a case called "cutting plate" the aforesaid blade has the task not only to cut but also to convey the cut grass towards a mouth for the output from the cutting plate, to which usually, but not necessarily, a rigid bag for the collection of the grass is connected.

In some cases the possibility is provided to close the output mouth, thus forcing the grass to remain inside the case in order to carry out the so-called "mulching" or "crumbling", that is the cutting of the grass in tiny parts that are then discharged on the ground.

If it must only cut and convey the blade provides at its ends a pair of collecting fins that are provided with relative cutting edges and bent with respect to the general plane of the blade in such a way so as to drag the cut grass and to convey it towards the output mouth of the cutting plate.

If instead the "mulching" action also is provided, the blade, more towards the centre of the blade, additionally has one or more pairs of mulching fins that are bent in opposite sense as compared with the collecting fins with the scope to mulch the cut grass that remains in the cutting plate. As an alternative the "mulching" action can be carried out by a specific blade different from the cutting and collecting one.

Current double function blades have the defect of not giving optimal collection and mulching functions. In addition they are noisy, besides having a non-easy and non-cheap construction.

US-A-5 711 191 discloses a cutting blade according to the preamble of claim 1.

EP-A-0 069 110 discloses a cutting blade having cutting edges extending along both sides and the entire length of the blade.

Scope of the present invention has therefore been to provide a cutting blade for lawn mower, having the double function of collecting and mulching the cut grass, that offers the best performances and in addition has the advantage of a low noisiness and the one of an easier and cheaper construction.

According to the invention such scope has been attained with a cutting blade as recited is claim 1. It has been possible to observe that, by opportunely choosing the bending angles and the heights of the mulching and collection fins and the length proportions of the same ones, a cut blade is obtained that is capable to carry out with optimum results both the collection and mulching actions, besides the cutting, and has a reduced noisiness.

In addition the creation of cutting edges on the entire length of the metal shape bar makes the fabrication of the blade easier and cheaper.

The characteristics of the present invention will be better understood through the following detailed description of an embodiment thereof in the enclosed drawings, in which:

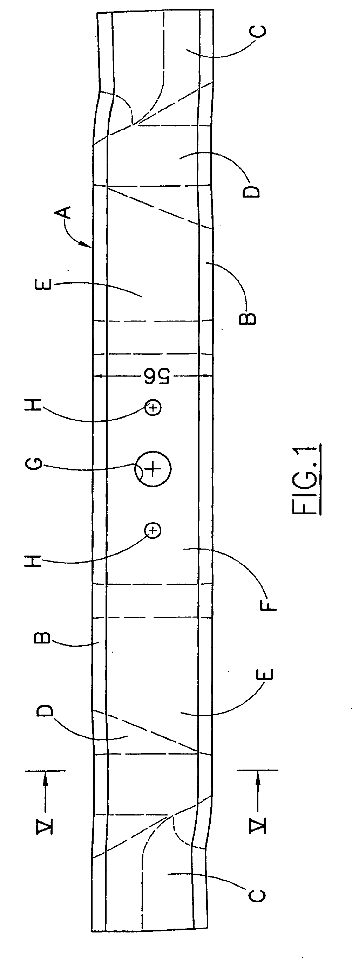

Figure 1 shows a cutting blade according to the invention in top plant;

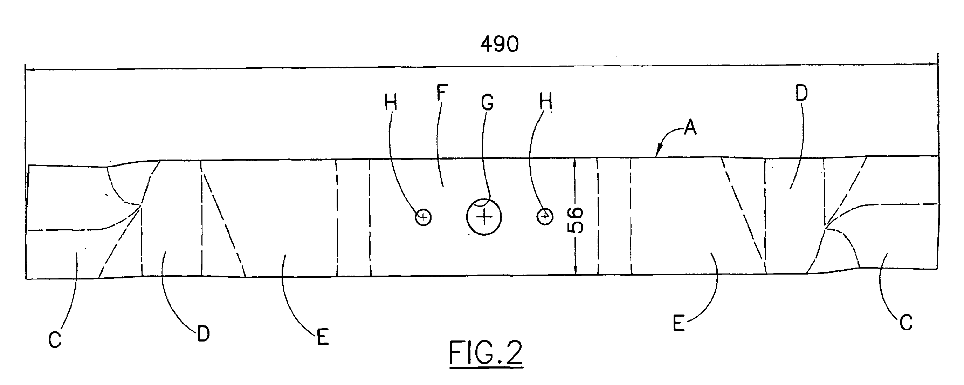

Figure 2 shows the same blade in bottom plan;

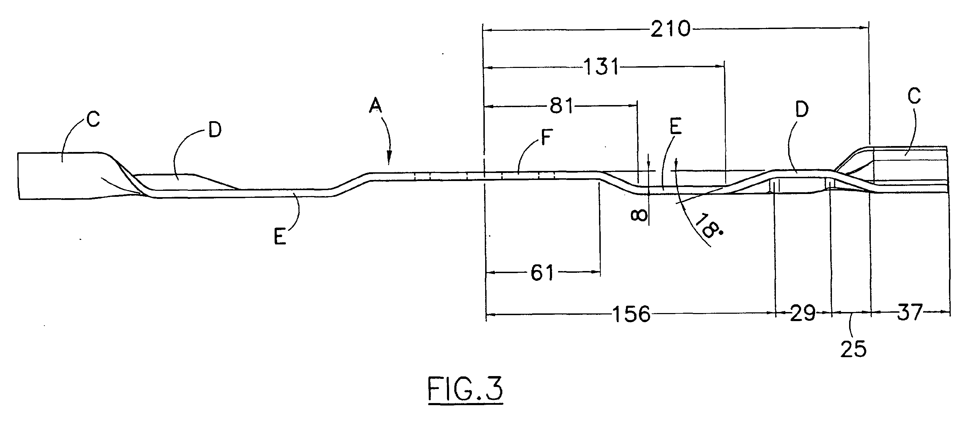

Figure 3 shows the same blade in front view;
Figure 4 shows the same blade as seen from the right and the left of Figure 1;
Figure 5 shows the same blade as seen in section along the line V-V in Figure 1.

The cutting blade illustrated in the drawings is made up of a metal shape bar A, generally flat, that has cutting edges B that extend for the entire length of the same metal shape.

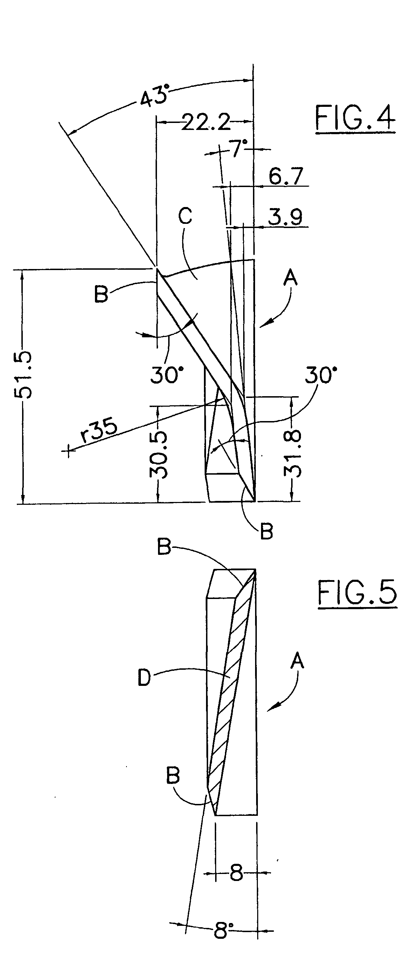

At the two ends of the metal shape bar a pair of collecting fins C are provided that are bent helicoidally with respect to the general plane of the strip (Figure 4).

In position adjacent to the collecting fins C, more toward the center of the metal shape bar, a pair of mulching fins D is provided that are linearly bent in sense opposite to them.

Finally, flat portions E are provided that connect the mulching fins D to a central area F destined to the attachment of the blade to a motorized shaft. The central area F is provided with holes G and H for the fastening of the blade.

From the drawings the preferable proportions for the cutting blade and its parts can be observed.

As it is possible to see, the blade has preferably collecting fins C that are 37 milimeter long and 22,2 milimeter high with internal curvature radius of 35 milimeter, final bending angle of 43°, initial bending angle of 7°.

The mulching fins D have in turn a central flat portion that is 29 milimeter long and that is 25 milimeter distant from the adjacent collection fin C and it couples at its two ends with an angle of 18°. In addition they have a bending angle of 8°, in opposite sense with respect to the collecting fins C.

Finally the cutting edges B have a cutting angle of 30°.

The other size indicated in the drawings are purely exemplifying and variable from blade to blade.

## Claims

1. Cutting blade for lawn mower, made up of a generally flat metal bar (A) having a central area (F) for the attachment of the blade to a motorized shaft, a pair of collecting fins (C) provided at the ends of the metal bar (A) and bent helicoidally with respect to said central area (F) so as to have leading and trailing edges extending in respective planes parallel to that of said central area (F), a pair of mulching fins (D) adjacent to said collecting fins (C) and bent in opposite sense with respect to them, and connecting flat portions (E) between said mulching fins (D) and said central area (F), **characterized in that** the metal bar (A) has cutting edges (B) that extend along both sides and for the entire length thereof and said connecting flat portions (E) are arranged in a plane parallel to that of said central area (F).

2. Cutting blade according to claim 1, **characterised in that** said collecting fins (C) have a length of approximately 37 milimeter, a height of approximately 22 milimeter with internal curvature radius of approximately 35 milimeter, final bending angle of approximately 43°, initial bending angle of approximately 7°.

3. Cutting blade according to claim 2, **characterised in that** said mulching fins (D) have a flat central portion that is approximately 29 milimeters long that is approximately 25 milimeter distant from the adjacent collecting fin (C) and couples at its two ends with an angle of approximately 18°.

4. Cutting blade according to claim 3, **characterised in that** said mulching fins (D) have a bending angle of approximately 8°.

5. Cutting blade according to claim 1, **characterised in that** said cutting edges (b) have a cutting angle of approximately 30°.

## Patentansprüche

1. Schneidmesser für Rasenmäher, bestehend aus:
einer hauptsächlich flachen Metallleiste (A) mit einem Mittelbereich (F) zum Befestigen des Messers an einer motorisierten Welle,
einem Paar von Sammelflossen (C), die an den Enden der Metallleiste (A) bereitgestellt und gegenüber dem Mittelbereich (F) schraubenartig so gebogen sind, dass sie vorlaufende und nachlaufende Kanten aufweisen, die sich jeweils in Ebenen parallel zu derjenigen des Mittelbereichs (F) erstrecken,
einem Paar von Mulchflossen (D), die den Sammelflossen (C) benachbart sind und gegenüber diesen in die entgegengesetzte Richtung gebogen sind, und
Verbindungsflachabschnitten (E) zwischen den Mulchflossen (D) und dem Mittelbereich (F),
**dadurch gekennzeichnet, dass**
die Metallleiste (A) Schneidkanten (B) aufweist, die sich entlang ihrer beiden Seiten über ihre gesamte Länge erstrecken, und
die Verbindungsflachabschnitte (E) in einer Ebene angeordnet sind, die zu der des Mittelbereichs (F) parallel ist

2. Schneidmesser nach Anspruch 1, **dadurch gekennzeichnet, dass** die Sammelflossen (C) eine Länge von etwa 37 Millimeter, eine Höhe von etwa 22 Millimeter mit einem inneren Krümmungsradius von etwa 35 Millimeter, einen Endbiegewinkel von etwa 43° und einen Anfangsbiegewinkel von etwa 7° aufweisen.

3. Schneidmesser nach Anspruch 2, **dadurch gekennzeichnet, dass** die Mulchflossen (D) einen flachen Mittelabschnitt aufweisen, der etwa 29 Millimeter lang ist, etwa 25 Millimeter von der benachbarten Sammelflossen (C) entfernt ist und an seinen beiden Enden mit einem Winkel von etwa 18° anschließt.

4. Schneidmesser nach Anspruch 3, **dadurch gekennzeichnet, dass** die Mulchflossen (D) einen Biegewinkel von etwa 8° aufweisen.

5. Schneidmesser nach Anspruch 1, **dadurch gekennzeichnet, dass** die Schneidkanten (B) einen Schneidewinkel von etwa 30° aufweisen.

## Revendications

1. Lame de coupe pour tondeuse à gazon constituée d'une barre métallique généralement plate (A) ayant une zone centrale (F) pour la fixation de la lame à un arbre motorisé, une paire d'ailettes collectrices (C) prévues au niveau des extrémités de la barre métallique (A) et pliées de façon hélicoïdale par rapport à ladite zone centrale (F) afin d'avoir des bords d'attaque et de fuite qui s'étendent dans des plans respectivement parallèles à celui de ladite zone centrale (F), une paire d'ailettes de paillage (D) adjacentes auxdites ailettes collectrices (C) et pliées dans le sens opposé par rapport à elles, et des parties plates de raccordement (E) entre lesdites ailettes de paillage (D) et ladite zone centrale (F), **caractérisée en ce que** la barre métallique (A) a des bords de coupe (B) qui s'étendent le long des deux côtés et sur toute sa longueur et lesdites parties plates de raccordement (E) sont agencées dans un plan parallèle à celui de ladite zone centrale (F).

2. Lame de coupe selon la revendication 1, **caractérisée en ce que** lesdites ailettes collectrices (C) ont une longueur d'approximativement 37 millimètres, une hauteur d'approximativement 22 millimètres avec un rayon de courbure interne d'approximativement 35 millimètres, un angle de pliage final d'approximativement 43°, un angle de pliage initial d'approximativement 7°.

3. Lame de coupe selon la revendication 2, **caractérisée en ce que** lesdites ailettes de paillage (D) ont une partie centrale plate qui est d'approximativement 29 millimètres de long et qui est à approximativement 25 millimètres de distance de l'ailette collectrice adjacente (C) et qui s'accouple au niveau de ses deux extrémité avec un angle d'approximativement 18°.

4. Lame de coupe selon la revendication 3, **caractérisée en ce que** lesdites ailettes de paillage (D) ont un angle de pliage d'approximativement 8°.

5. Lame de coupe selon la revendication 1, **caractérisée en ce que** lesdits bords de coupe (b) ont un angle de coupe d'approximativement 30°.
